# EUROPÄISCHE PATENTSCHRIFT

(11) **EP 2 363 616 B1**
(45) Veröffentlichungstag und Bekanntmachung des Hinweises auf die Patenterteilung: **09.01.2013**
(21) Anmeldenummer: 11155598.3
(22) Anmeldetag: 23.02.2011
(51) Int. Cl.: F16D 65/56, F16D 55/226, F16D 65/38

(54) **Scheibenbremse für ein Nutzfahrzeug**
Disc brake for a commercial vehicle
Frein à disque pour un véhicule utilitaire

(30) Priorität: 25.02.2010 DE 102010009262
(43) Veröffentlichungstag der Anmeldung: 07.09.2011
(73) Patentinhaber: KNORR-BREMSE Systeme für Nutzfahrzeuge GmbH, 80809 München (DE)
(72) Erfinder: Gruber, Robert, 83539, Pfaffing (DE); Werth, Alexander, 80997, München (DE)
(74) Vertreter: Mattusch, Gundula

(56) Entgegenhaltungen:
- EP-A1- 0 569 031
- WO-A1-2007/028585
- DE-A1- 10 304 713

## Beschreibung

Die Erfindung betrifft eine Scheibenbremse für ein Nutzfahrzeug nach dem Oberbegriff des Anspruchs 1.

Zur Montage von Stellspindeln, ebenso wie der Nachstelleinrichtung, mittels der zu einem Lüftspielausgleich von Bremsbelägen gegenüber einer Bremsscheibe die Stellspindeln entsprechend betätigt werden, ist im Bremssattel, auf der der Bremsscheibe abgewandten Rückseite eine Montageöffnung vorgesehen, über die ein Zugriff auf einen Aufnahmeraum für die Stellspindeln möglich ist und die durch einen Deckel verschlossen ist.

Üblicherweise ist der Deckel mit dem Bremssattel verschraubt, wodurch zwar eine lagegenaue und damit einfache Montage des Deckels möglich ist, da die Schrauben auch beim Anbringen des Deckels eine Fixierung darstellen, andererseits ist diese Verschraubung mit einigen, zum Teil erheblichen Nachteilen verbunden.

So ist zunächst einmal der relativ hohe Fertigungsaufwand zu nennen, der sich aus dem Einbringen von Gewindebohrungen in den Bremssattel ergibt. Daneben führen die Gewindebohrungen häufig zu verfrühten Brüchen des Sattels, insbesondere aufgrund der Materialschwächung in Kombination mit der betriebsbedingt auftretenden Dauer- bzw. Wechselbeanspruchung.

Um hier Abhilfe zu schaffen, ist bereits vorgeschlagen worden (WO 2007/028 585 A2 und DE 10 304 713 A1), den Deckel am Bremssattel festzukleben, wozu eine gleichzeitig den Verbindungsbereich Deckel/ Bremssattel abdichtende 2-Komponenten-Dichtung als Flüssigdichtung zum Einsatz kommt, die nach einem Aushärten eine stoffschlüssige Verbindung ergibt.

Allerdings bedarf es eines erheblichen fertigungstechnischen Aufwandes, um diese Klebverbindung herstellen zu können. Hierzu zählt insbesondere das Auftragen der Flüssigdichtung auf den Bremssattel bzw. auf den entsprechenden Bereich des Deckels, wobei die Auftragsfläche des Bremssattels für eine einwandfreie Verklebung vorbereitet werden muss. Dies erfordert kostensteigernde Maßnahmen, ebenso wie eine exakte Positionierung des Deckels.

Alles in allem sind die bekannten Möglichkeiten, den Deckel mit dem Bremssattel zu verbinden, nicht geeignet, eine Fertigungsoptimierung zu erreichen, wie sie für eine Scheibenbremse als Serienprodukt gewünscht wird.

Der Erfindung liegt die Aufgabe zugrunde, eine Scheibenbremse der gattungsgemäßen Art so weiterzuentwickeln, dass sie mit geringem fertigungstechnischem Aufwand herstellbar ist und damit eine kostengünstigere Fertigung ermöglicht wird.

Diese Aufgabe wird durch eine Scheibenbremse mit den Merkmalen des Anspruchs 1 gelöst.

Durch diese konstruktive Ausbildung der Scheibenbremse kann auf den Einsatz zusätzlicher Verbindungsmittel, wie Schrauben als Formschlussmittel oder Kleber als Stoffschlussmittel verzichtet werden, was per se zu einer Verringerung der Beschaffungskosten führt.

Darüber hinaus ist die Herstellung der Verbindung nun wesentlich einfacher und damit gleichfalls kostengünstiger, da weder vorbereitende Arbeiten erforderlich sind, noch besondere Maßnahmen, um eine Fixierung des Deckels vor Eintritt der Klebwirkung zu erreichen.

In jedem Fall ist eine sichere Dichtung zwischen dem Deckel und dem Bremssattel gewährleistet, wozu nach einer vorteilhaften Weiterbildung der Erfindung an den insgesamt aus Kunststoff bestehenden Deckel auf seiner Anlageseite zum Bremssattel eine Schmelzraupe angeformt ist, die nach Erhitzen und anschließendem Erstarren eine feste Verbindung mit dem Bremssattel bildet, wobei der Deckel mit Druck beaufschlagt wird, so dass sich diese Raupe entsprechend verformt und mit einer vergrößerten Verbindungsfläche am Bremssattel anliegt.

Weiter ist neben dem durch das Anschmelzen geschaffenen Stoffschluss ein Formschluss gebildet, wozu der Bremssattel beispielsweise Hinterschneidungen aufweisen kann, die von dem angeschmolzenen Kunststoff hintergriffen werden und nach dessen Aushärten eine Verkrallung bildet.

Solche Hinterschneidungen können als Vertiefungen bei der Herstellung des Bremssattels eingebracht sein, was insofern unproblematisch ist, als der Bremssattel üblicherweise aus Gusseisen besteht.

Eine Vertiefung im Sinne eines Kanales kann sich seitlich über den Überdeckungsbereich des Deckels, d.h. über dessen Außenrand hinaus erstrecken, so dass eine visuelle Kontrolle der Aufschmelzung des Kunststoffs möglich ist, da sich der erhitzte Kunststoff beim Schmelzen und Andrücken des Deckels in den Gesamtbereich des Kanales ausdehnt, wozu beispielsweise die erwähnte Raupe ein entsprechendes Volumen aufweisen muss.

Die Erwärmung des Kunststoffs kann auf unterschiedliche Art und Weise erfolgen. Denkbar ist beispielsweise, den Bremssattel im Anlagebereich des Deckels, also partiell, zu erwärmen, z.B. durch Induktion. Alternativ oder ergänzend kann auch der aus Kunststoff bestehende Deckel vor allem in der aufzuschmelzenden Zone erhitzt werden.

Als weitere Möglichkeiten der Erwärmung sind der Einsatz von sogenanntem Warmgas, einer offenen Flamme, mit der gleichzeitig die Oberfläche gereinigt wird, Heizelementen, Vibrationserwärmung, Ultraschallerwärmung, Bestrahlung oder mittels chemischer Reaktionen denkbar.

Fertigungstechnisch ist die Erfindung äußerst einfach zu realisieren, da das Anschmelzen der Kunststofflage des Deckels gleichzeitig in einem Arbeitsgang mit dem Aufsetzen des Deckels auf den Bremssattel erfolgen kann. Zusätzliche Arbeiten, im Sinne des erwähnten Auftragens der als Kleber dienenden Flüssigdichtung sind nicht erforderlich, wodurch sich natürlich eine Kostenminimierung ergibt. Dies trifft in verstärktem Maße in Relation zum Anschrauben des Deckels zu, da spangebende Arbeiten, wie das Einbringen von Gewindebohrungen gänzlich unterbleiben können.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: den schematischen Aufbau einer Scheibenbremse in einer teilweise geschnittenen Draufsicht
- Figur 2: einen Teilausschnitt einer erfindungsgemäßen Scheibenbremse in einer perspektivischen Ansicht
- Figur 3: ein weiteres Ausführungsbeispiel der Erfindung, ebenfalls als Teilausschnitt in einer geschnittenen Seitenansicht.

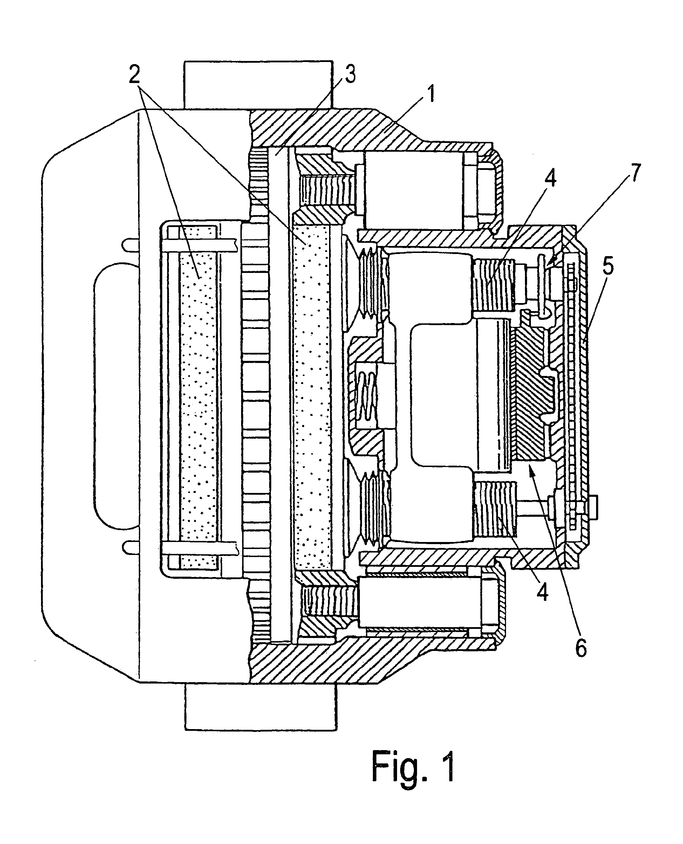

In der Figur 1 ist eine Scheibenbremse für ein Nutzfahrzeug dargestellt, mit einem eine Bremsscheibe 3 übergreifenden Bremssattel 1, beidseitig der Bremsscheibe 3 angeordneten und diese bei einer Bremsung kontaktierenden Bremsbelägen 2, einer Zuspanneinrichtung 6, mit der der zuspannseitige Bremsbelag 2 gegen die Bremsscheibe 3 pressbar ist, wobei der Anpressdruck von zwei Stellspindeln 4 von der Zuspanneinrichtung 6 auf den Bremsbelag 2 übertragen wird, sowie einer Nachstelleinrichtung 7, mit der eine verschleißbedingte Änderung eines Lüftspiels zwischen dem Bremsbelag 2 und der Bremsscheibe 3 im Wesentlichen ausgleichbar ist. Dabei ist die Nachstelleinrichtung 7 verdrehfest an einer der Stellspindeln 4 angeordnet.

Rückseitig weist der Bremssattel 1 eine Montageöffnung auf, durch die die Nachstelleinrichtung in einen Aufnahmeraum des Bremssattels 1 einbringbar ist.

Diese Montageöffnung ist durch einen Deckel 5 verschlossen, wobei der Deckel 5 die Nachstelleinrichtung 7 überdeckt.

Erfindungsgemäß ist dabei der Deckel 5 durch An- bzw. Aufschmelzen einer deckelseitigen Kunststofflage 8 mit dem Bremssattel 1 verklebt.

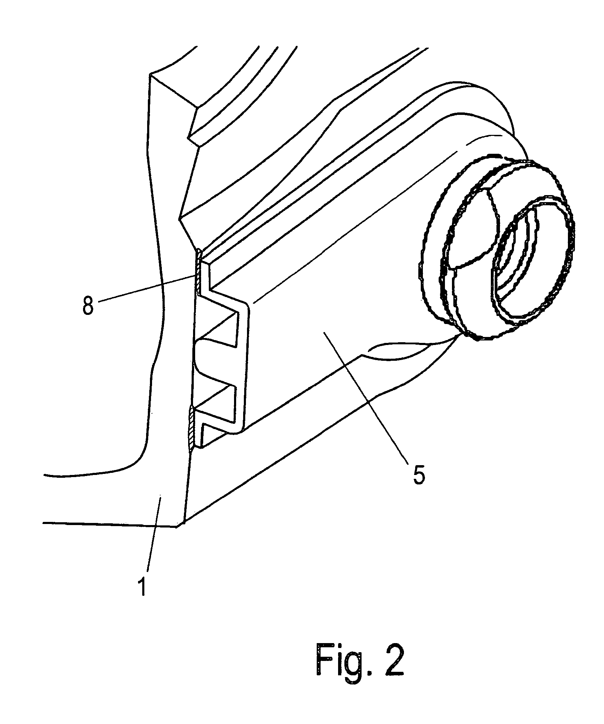

Hierzu kann der Deckel 5 insgesamt aus Kunststoff bestehen und auf der dem Bremssattel 1 bzw. dem Anklebbereich zugewandten Seite beispielsweise mit einer am Deckelrand vorgesehenen, angegossenen umlaufenden Raupe versehen sein, die bei Erwärmung hin zur Schmelztemperatur und bei Druckbeaufschlagung eine Klebfläche bildet, durch die ein Stoffschluss mit dem Bremssattel 1 erreicht wird. Eine solche Verbindung ist in der Figur 2 dargestellt.

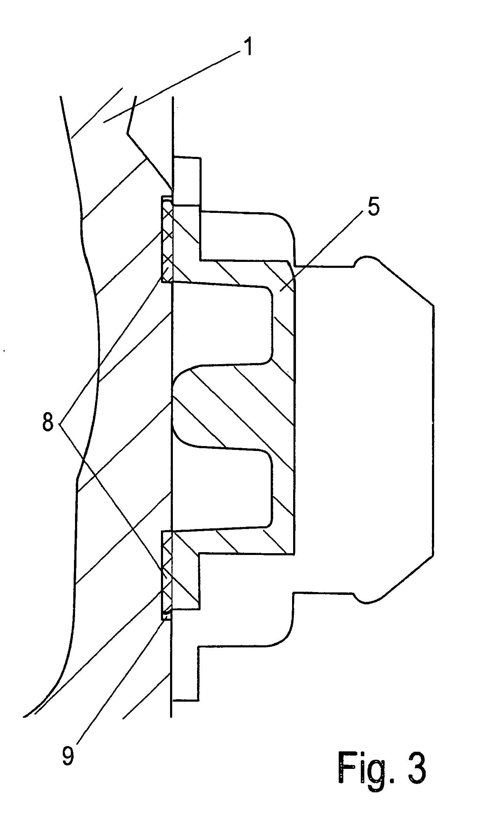

Hierbei ist die Anlagefläche des Bremssattels 1 plan ausgebildet, wohingegen bei dem Ausführungsbeispiel nach Figur 3 der Bremssattel 1, entsprechend der Kontur des Deckels 5 eine umlaufende Nut 9 aufweist, die überdies mit einer Hinterschneidung versehen sein kann und die von der angeschmolzenen und anschließend ausgehärteten Kunststofflage 8 ausgefüllt ist, zumindest weitgehend.

Dabei ragt die Nut 9 seitlich über den Überdeckungsbereich des Deckels 5 hinaus, so dass die geschmolzene Kunststofflage 8 über den äußeren Randbereich des Deckels 5 hinausquillt. Dies ist visuell erkennbar und ein Hinweis darauf, dass eine ordnungsgemäße Verklebung, die gleichbedeutend mit einer ordnungsgemäßen Abdichtung ist, vorliegt.

Der Deckel 5 als Vorprodukt kann auch aus Metall bestehen, wobei hier die Kunststofflage 8 bereits, beispielsweise durch Plastifizierung, vormontiert ist, sich anschließend bei der Erwärmung entsprechend verformt und mit dem Bremssattel 1 ebenso wie mit dem metallenen Deckel verklebt.

## Patentansprüche

1. Scheibenbremse für ein Nutzfahrzeug, mit einem Bremssattel (1), an dem ein einen rückseitigen Aufnahmeraum, insbesondere für eine Nachstelleinrichtung (7), verschließender Deckel (5) befestigt ist, **dadurch gekennzeichnet, dass** der Deckel (5) durch An- bzw. Aufschmelzen einer deckelseitigen Kunststofflage (8) mit dem Bremssattel (1) stoff- und formschlüssig verbunden ist.

2. Scheibenbremse nach Anspruch 1, dadurch gekenntzeichnet, dass der Deckel (5) vor einer Verbindung mit dem Bremssattel (1) auf seiner dem Bremssattel (1) zugewandten Seite einen umlaufenden Wulst aufweist, der nach dem Anschmelzen die Kunststofflage (8) bildet.

3. Scheibenbremse nach Anspruch 1 oder 2, **dadurch gekennzeichnet, dass** die Kunststofflage (8) eine Abdichtung zwischen dem Bremssattel (1) und dem Deckel (5) bildet.

4. Scheibenbremse nach einem der vorhergehenden Ansprüche, **dadurch gekennzeichnet, dass** die Kunststofflage (8) eine Nut (9) des Bremssattels (1) zumindest weitgehend ausfällt.

5. Scheibenbremse nach Anspruch 4, **dadurch gekennzeichnet, dass** die Nut (9) sich seitlich über den Randbereich des Deckels (5) in einen einsehbaren Bereich erstreckt.

6. Scheibenbremse nach einem der Ansprüche 4 oder 5, **dadurch gekennzeichnet, dass** die Nut (9) mit Hinterschneidungen versehen ist.

7. Verfahren zur Herstellung einer Scheibenbremse nach Anspruch 1, **dadurch gekennzeichnet, dass** der Deckel (5) und/oder der Bremssattel (1) im gemeinsamen Anlagebereich auf eine Schmelztemperatur der Kunststofflage (8) erwärmt werden.

8. Verfahren nach Anspruch 7, **dadurch gekennzeichnet, dass** der Deckel (5) nach dem Schmelzen der Kunststofflage (8) und vor deren Aushärten gegen den Bremssattel (1) gedrückt wird.

## Claims

1. Disc brake for a commercial vehicle, comprising a brake calliper (1) on which a cover (5) is fastened that closes a rear-side receiving space, in particular for a readjustment means (7), **characterised in that** said cover is connected to said brake calliper (1) by material and form-fitting manner by fusing a synthetic-material layer (8) thereon on the cover side.

2. Disc brake according to Claim 1, **characterised in that** prior to a connection to said brake calliper (1), said cover (5) presents a peripheral bead on its side facing said brake calliper (1), which constitutes said synthetic-material layer (8) after fusion.

3. Disc brake according to Claim 1 or 2, **characterised in that** said synthetic-material layer (8) constitutes a seal between said brake calliper (1) and said cover (5).

4. Disc brake according to any of the preceding Claims, **characterised in that** said synthetic-material layer (8) fills, at least largely, a groove (9) in said brake calliper (1).

5. Disc brake according to Claim 4, **characterised in that** said groove (9) extends laterally beyond the marginal region of said cover (5) into a viewable region.

6. Disc brake according to any of the Claims 4 or 5, **characterised in** said groove (9) is provided with undercuts.

7. Method of manufacturing a disc brake according to Claim 1, **characterised in that** said cover (5) and/or said brake calliper (1) are heated in the common contact region to a fusion temperature of said synthetic-material layer (8).

8. Method according to Claim 7, **characterised in that** after fusion of said synthetic-material layer (8) and prior to setting thereof, said cover (5) is pressed against said brake calliper (1).

## Revendications

1. Frein à disque pour un véhicule utilitaire, comprenant étrier de frein (1) auquel est fixé un couvercle (5), qui ferme un espace récepteur du côté arrière, en particulier pour un moyen de rattrapage (7), **caractérisé en ce que** ledit couvercle est raccordé audit étrier de frein (1) par matériau à engagement positif, par y fuser une couche en matière synthétique (8) du côté du couvercle.

2. Frein à disque selon la revendication 1, **caractérisé en ce qu'**avant le raccord audit étrier de frein (1), ledit couvercle (5) présente un bourrelet périphérique de son côté en face dudit étrier de frein (1), qui constitue ladite couche en matière synthétique (8) après la fusion.

3. Frein à disque selon la revendication 1 ou 2, **caractérisé en ce que** ladite couche en matière synthétique (8) constitue une garniture d'étanchéité entre ledit étrier de frein (1) et ledit couvercle (5).

4. Frein à disque selon une quelconque des revendications précédentes, **caractérisé en ce que** ladite couche en matière synthétique (8) remplie, au moins largement une rainure (9) dans ledit étrier de frein (1).

5. Frein à disque selon la revendication 4, **caractérisé en ce que** ladite rainure (9) s'étend latéralement au-delà de la zone marginale dudit couvercle (5) dans une zone visible.

6. Frein à disque selon une quelconque des revendications 4 ou 5, caractérisé en ce ladite rainure (9) est munie des dépouilles inverses.

7. Procédé de fabrication d'un frein à disque selon la revendication 1, **caractérisé en ce que** ledit couvercle (5) et ou ledit étrier de frein (1) sont chauffés dans la zone commune de contact à une température de fusion de ladite couche en matière synthétique (8).

8. Procédé selon la revendication 7, **caractérisé en ce que**, après la fusion de ladite couche en matière synthétique (8) et avant le durcissement de la dernière, ledit couvercle (5) est pressé contre ledit étrier de frein (1).
